(19) **Europäisches Patentamt / European Patent Office / Office européen des brevets**

(11) **EP 4 572 276 A1**

(12) **EUROPEAN PATENT APPLICATION**
published in accordance with Art. 153(4) EPC

(43) Date of publication:
**18.06.2025 Bulletin 2025/25**

(21) Application number: **23861945.6**

(22) Date of filing: **13.06.2023**

(51) International Patent Classification (IPC):
***H04L 27/26*** (2006.01)

(52) Cooperative Patent Classification (CPC):
**H04L 27/26**

(86) International application number:
**PCT/CN2023/099777**

(87) International publication number:
**WO 2024/051242 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.09.2022 CN 202211080863**

(71) Applicant: **ZTE Corporation
Shenzhen, Guangdong 518057 (CN)**

(72) Inventors:
• **XIN, Yu**
**Shenzhen, Guangdong 518057 (CN)**
• **BAO, Tong**
**Shenzhen, Guangdong 518057 (CN)**
• **HUA, Jian**
**Shenzhen, Guangdong 518057 (CN)**
• **YU, Guanghui**
**Shenzhen, Guangdong 518057 (CN)**

(74) Representative: **Aipex B.V.
Vestdijk 51
5611 CA Eindhoven (NL)**

(54) **DATA TRANSMISSION METHOD, AND DEVICE AND STORAGE MEDIUM**

(57) Provided are a data transmission method and device and a storage medium. The data transmission method includes performing (S110) pointwise multiplication between a first data sequence and a second data sequence to obtain a third data sequence, where the first data sequence and the second data sequence are each a frequency-domain data sequence; performing (S120) an inverse Fourier transform on the third data sequence to obtain a fourth data sequence; and transmitting (S130) the fourth data sequence on a physical time-frequency resource.

Perform pointwise multiplication between a first data sequence and a second data sequence to obtain a third data sequence, where the first data sequence and the second data sequence are each a frequency-domain data sequence — S110

Perform an inverse Fourier transform on the third data sequence to obtain a fourth data sequence — S120

Transmit the fourth data sequence which is carried on a physical time-frequency resource — S130

**FIG. 1**

**Description**

TECHNICAL FIELD

The present application relates to the field of wireless communications, for example, a data transmission method and device and a storage medium.

BACKGROUND

In the fifth-generation (5G) mobile communication technology, frequency bands can be divided into high-frequency bands and low-frequency bands. High-frequency bands are millimeter-wave bands while low-frequency bands overlap the frequency bands used in the fourth-generation (4G) mobile communication technology. Low-frequency bands are primarily used for Massive Machine-Type Communications (mMTC) services while high-frequency bands are primarily used for enhanced Mobile BroadBand (eMBB) services and Ultra-Reliable Low-Latency Communications (URLLC) services.

High-frequency bands experience significant path loss and shadow fading, resulting in very low signal-to-noise ratios (SNR) in certain areas at the cell edge. Additionally, in high-frequency scenarios, the efficiency of a power amplifier (PA) is relatively low. To improve the signal-to-interference-plus-noise ratio (SINR) while conserving battery power for a user equipment (UE), it is necessary for the peak-to-average power ratio (PAPR) of the signals transmitted by the UE to be kept low.

In mMTC scenarios, some UEs aim to significantly reduce power consumption, with a desired battery life of over ten years. To improve the efficiency of the PA of a UE, it is also necessary to maintain a low PAPR for the signals transmitted by the UE. Especially when a large number of users are accessing the network non-orthogonally, the SINR may be very low. Consequently, there is a demand for a low-order modulation and coding scheme (MCS) with a low PAPR for signal modulation.

In the 5G New Radio (NR) standard, signals modulated using discrete Fourier transform-spread-orthogonal frequency-division multiplexing (DFT-s-OFDM) have a relatively low PAPR, still not satisfying the application scenarios that demand an even lower PAPR in the Beyond 5G (B5G) or sixth-generation (6G) mobile communication technology.

SUMMARY

Embodiments of the present application provide a data transmission method and device and a storage medium.

In a first aspect, an embodiment of the present application provides a data transmission method. The method includes performing a pointwise multiplication between a first data sequence and a second data sequence to obtain a third data sequence, where the first data sequence and the second data sequence are each a frequency-domain data sequence; performing an inverse Fourier transform on the third data sequence to obtain a fourth data sequence; and transmitting the fourth data sequence on a physical time-frequency resource.

In a second aspect, an embodiment of the present application provides a data transmission device. The device includes a memory configured to store a program; and a processor configured to execute the program to perform a pointwise multiplication between a first data sequence and a second data sequence to obtain a third data sequence, where the first data sequence and the second data sequence are each a frequency-domain data sequence; perform an inverse Fourier transform on the third data sequence to obtain a fourth data sequence; and transmit the fourth data sequence on a physical time-frequency resource.

In a third aspect, an embodiment of the present application provides a storage medium. The storage medium stores a program. When the program is executed, the data transmission method of any embodiment of the present application is performed.

The data transmission method and device and the storage medium according to embodiments of the present application involve performing an inverse Fourier transform on a data sequence generated by pointwise multiplication between two frequency-domain data sequences; and then transmitting the data sequence after the inverse Fourier transform on a physical time-frequency resource, thereby effectively reducing the PAPR of the transmitted data sequence.

BRIEF DESCRIPTION OF DRAWINGS

FIG. 1 is a flowchart of a data transmission method according to an embodiment of the present application.

FIG. 2 is a diagram illustrating the insertion of one piece of data between two adjacent pieces of data.

FIG. 3 is a diagram illustrating the insertion of two pieces of data between two adjacent pieces of data.

FIG. 4 is a waveform diagram of a root-raised cosine function according to an embodiment of the present application.

FIG. 5 is a diagram of a data sequence according to an embodiment of the present application.

FIG. 6 is a diagram of a data sequence according to an embodiment of the present application.

FIG. 7 is a diagram illustrating the structure of a data processing network for data modulation in a data transmission method according to an embodiment of the present application.

FIG. 8 is a diagram illustrating the structure of a data transmission device according to an embodiment of the present application.

DETAILED DESCRIPTION

Embodiments of the present application are described hereinafter in conjunction with drawings.

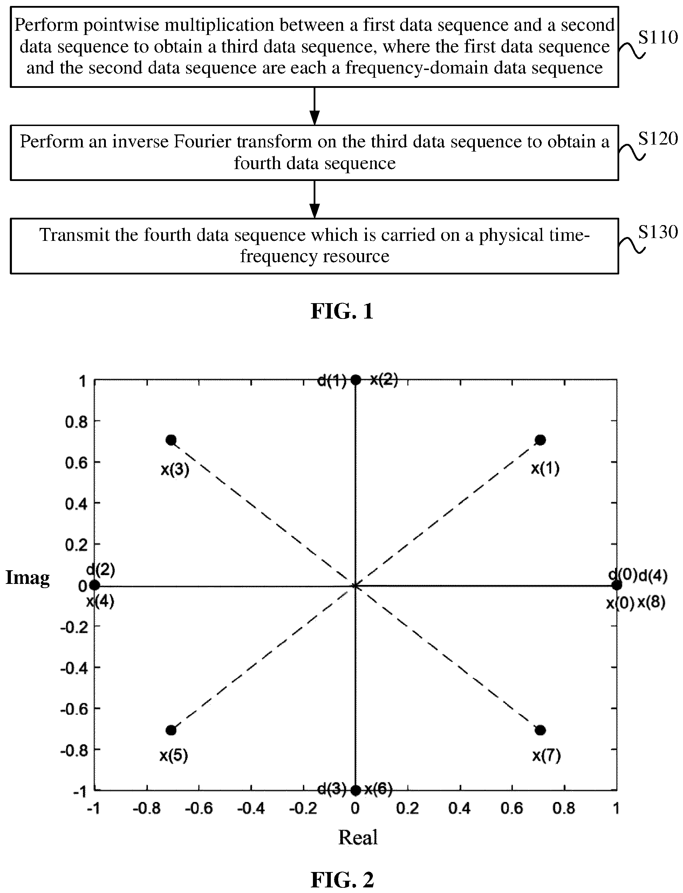

FIG. 1 is a flowchart of a data transmission method according to an embodiment of the present application. As shown in FIG. 1, the data transmission method of this embodiment includes S110 to S130.

In S110, pointwise multiplication is performed between a first data sequence and a second data sequence to obtain a third data sequence, where the first data sequence and the second data sequence are each a frequency-domain data sequence.

The data transmission method of this embodiment can be applied to any node in a wireless communication system, particularly a user equipment (UE) in this system. To address the problem of high PAPR in signal transmission from nodes in wireless communications, this embodiment of the present application provides a signal modulation scheme. Modulation using this signal modulation scheme before transmission enables a lower PAPR.

In this embodiment, pointwise multiplication is performed between a first data sequence and a second data sequence to obtain a third data sequence. The first data sequence is a to-be-transmitted data sequence while the second data sequence is a preset data sequence. The first data sequence and the second data sequence are each a frequency-domain data sequence. Pointwise multiplication between the first data sequence and the second data sequence can also be referred to as frequency-domain shaping of the first data sequence, with the second data sequence as the frequency-domain shaping function. The pointwise multiplication can also be referred to as a filtering operation, with the second data sequence as the filtering function.

In this embodiment of the present application, the first data sequence is denoted as $[X(j)]$, the second data sequence is denoted as $[Z(j)]$, and the third data sequence is denoted as $[S(j)]$.

For example, the first data sequence is $[X(j)] = [x(1), x(2), ..., x(J)]$, the second data sequence is $[Z(j)] = [z(1), z(2), ..., z(J)]$ and the third data sequence is $[S(j)] = [x(1) \cdot z(1), x(2) \cdot z(2), \cdots, x(J) \cdot z(J)]$. Here $\cdot$ denotes multiplication. The length of the first data sequence and the length of the second data sequence may be the same or different. That is, the length J of the first data sequence $[X(j)]$ and the length J of the second data sequence $[Z(j)]$ may be the same or different.

In an embodiment, the second data sequence may be generated using a root-raised cosine function. The root-raised cosine function is a frequency-domain compressed root-raised cosine function. The value range of the roll-off factor of the root-raised cosine function is [0.7, 1]. The ratio of the half-power bandwidth of the root-raised cosine function to the bandwidth occupied by the first data sequence is P/2. The value range of P is [0.9, 1.1]. In an embodiment, the half-power bandwidth of the root-raised cosine function is half of the bandwidth occupied by the first data sequence. That is, P = 1, indicating a compression rate of 50%. In an embodiment, the roll-off factor of the root-raised cosine function is 1.

In an embodiment, the second data sequence is generated by discrete sampling on the root-raised cosine function.

In an embodiment, the length of the independent variable corresponding to a non-zero function value of the root-raised cosine function is less than or equal to the bandwidth occupied by the first data sequence.

In an embodiment, the root-raised cosine function $sry(f) = \sqrt{y(f)}$.

$y(f)$ denotes a raised cosine function:

$$y(f) = \begin{cases} A & 0 \le |f| < f_0(1-\alpha) \\ \dfrac{A}{2}(1+\cos(\dfrac{|f|-f_0(1-\alpha)}{2f_0\alpha}\pi)) & f_0(1-\alpha) \le |f| < f_0(1+\alpha) \\ 0 & |f| \ge f_0(1+\alpha) \end{cases}$$

.

Here A denotes a constant, $\alpha$ denotes the roll-off factor of the root-raised cosine function, $2f_0$ denotes the half-power bandwidth of the root-raised cosine function, and $2f_0(1 + \alpha)$ denotes the length of the independent variable corresponding to a non-zero function value of the root-raised cosine function.

In an embodiment, the first data sequence is generated from a fifth data sequence by a Fourier transform. The fifth data sequence is a time-domain data sequence. The fifth data sequence is generated from a sixth data sequence. The sixth data sequence is formed by constellation modulation of a seventh data sequence composed of 0 and 1. Constellation modulation of the sixth data sequence is $\pi/2$-binary phase-shift keying ($\pi/2$-BPSK). In an embodiment, the sixth data sequence is a reference sequence. The constellation modulation of the reference sequence is $\pi/2$-BPSK. The sixth data sequence contains L pieces of reference sequence data as well as constellation-modulated data. $L \ge 0$. In this embodiment of the present application, the fifth data sequence is denoted as $[x(j)]$, the sixth data sequence is denoted as $[d(i)]$, and the seventh data sequence is denoted as $[b(m)]$.

The fifth data sequence is generated from the sixth data sequence in the following manner: N pieces of new data are inserted between each two adjacent pieces of data in the sixth data sequence. Here each of the N pieces of new data is the sum of the two adjacent pieces of data multiplied by $\dfrac{\sqrt{2}}{2}$, and N is a non-negative integer. N is 0 or 1. When the value of N is 0, the sixth data sequence is used as the fifth data sequence. When the value of N is 1, one piece of new data is inserted between each two adjacent pieces of data in the sixth data sequence, and the new piece of data is the sum of the two adjacent pieces of data multiplied by $\dfrac{\sqrt{2}}{2}$. Alternatively, the fifth data sequence is generated from the sixth data sequence in the following manner: N pieces of new data are inserted between each two adjacent pieces of data in the sixth data sequence. Here the magnitude of each of the N pieces of new data is the same as the magnitude of each of the two adjacent pieces of data, the phase difference between adjacent pieces of data in the sixth data sequence obtained after the N pieces of new data are inserted is $\dfrac{\pi}{2N+2}$, and N is a non-negative integer. Each piece of data in a data sequence has the same magnitude. The phase difference between adjacent pieces of data after the insertion is $\dfrac{\pi}{2N+2}$. As N increases, the phase difference between adjacent pieces of data decreases, resulting in a lower PAPR for the time-domain data.

In S120, an inverse Fourier transform is performed on the third data sequence to obtain a fourth data sequence.

After the third data sequence is obtained, an inverse Fourier transform is performed on the third data sequence to generate a fourth data sequence. When generating the fourth data sequence, it is feasible to perform the inverse Fourier transform on the third data sequence, meaning that oversampling is not required. Additionally, when oversampling is required, it is feasible to perform a zero-padding operation on the third data sequence to form a new data sequence and then perform the inverse Fourier transform on the new data sequence to generate the fourth data sequence. In this embodiment of the present application, the fourth data sequence is denoted as $[s(k)]$.

When oversampling is not required, the fourth data sequence is, for example, $[s(k)]$, and $J = K$. Here $k = 1,2,..., K$. When oversampling is required, the fourth data sequence is, for example, $[s(k)]$, and $J < K$. Here $k = 1,2,..., K$.

In S130, the fourth data sequence is transmitted on a physical time-frequency resource.

After being generated, the fourth data sequence can be transmitted on a physical time-frequency resource. This effectively reduces the PAPR of the transmitted fourth data sequence. The reason for this is that frequency-domain pointwise multiplication is equivalent to time-domain data convolution. A predesigned weight coefficient sequence forms the time-domain discrete data of a well-designed frequency-domain data sequence. When a set of discrete time-domain data is convolved with this designed set of discrete data, the correlation between adjacent data improves, thereby effectively reducing the PAPR of the transmitted data sequence. When the frequency-domain data sequence corresponding to this set of discrete time-domain data is generated using a root-raised cosine function, the data correlation is better optimized.

Before transmitting the fourth data sequence on the physical time-frequency resource, it is also feasible to filter the fourth data sequence.

The data transmission method of this embodiment of the present application involves performing an inverse Fourier transform on a data sequence generated by pointwise multiplication between two frequency-domain data sequences; and then transmitting the data sequence after the inverse Fourier transform on a physical time-frequency resource, thereby effectively reducing the PAPR of the transmitted data sequence.

In this embodiment, when no data is inserted into the sixth data sequence, that is, N is equal to 0, that is, the sixth data sequence is used as the fifth data sequence, then the fifth data sequence is $\pi/2$-BPSK modulated data that has a relatively low PAPR. When the value of N is 1, that is, one piece of data is inserted between each two adjacent pieces of data in the sixth data sequence. The phase difference between the two adjacent pieces of data becomes $\pi/4$ from $\pi/2$ after the data insertion. This reduces the PAPR of the transmitted data sequence, resulting in a lower PAPR than that in $\pi/2$-BPSK constellation modulation.

The half-power bandwidth of the root-raised cosine function is half of the bandwidth occupied by the first data sequence. The roll-off factor of the root-raised cosine function is 1. The advantage is that no additional frequency-domain bandwidth is occupied, the transmitted data sequence has a low PAPR, and demodulation at the receiving end is not affected. This is because when the roll-off factor of the root-raised cosine function is 1, the bandwidth of the root-raised cosine function is the same as the bandwidth occupied by the first data sequence, indicating a compression rate of 50% in the frequency domain. This manifests as the position of the zero point of the side lobes of the time-domain waveform of the frequency-domain-compressed root-raised cosine function being different from the position of the zero point of the side lobes of the waveform of the sinc function. However, the time-domain data are either $\pi/2$-BPSK constellation-modulated data or interpolated from such data. As a result, the adjacent data are located on different directional axes, ensuring that the demodulation at the receiving end remains unaffected. Through this well-designed frequency-domain root-raised cosine function, the PAPR of the time-domain signal can be significantly reduced, demodulation of the time-domain data remains unaffected, and no additional frequency domain bandwidth is occupied.

In an embodiment, the sixth data sequence is a reference sequence. The constellation modulation of the reference sequence is $\pi/2$-BPSK. Thus, the reference sequence also has a low PAPR, and when the value of N is 1, this reference sequence is used for channel estimation, resulting in a better performance at the receiving end.

In an embodiment of FIG. 1, the second data sequence may be generated using a raised cosine function. The raised cosine function is a frequency-domain compressed raised cosine function. The value range of the roll-off factor of the raised cosine function is [0.7, 1]. The ratio of the half-power bandwidth of the raised cosine function to the bandwidth occupied by the first data sequence is P/2. The value range of P is [0.9, 1.1]. In an embodiment, the half-power bandwidth of the raised cosine function is half of the bandwidth occupied by the first data sequence. That is, P = 1, indicating a compression rate of 50%. In an embodiment, the roll-off factor of the raised cosine function is 1. In an embodiment, the second data sequence is generated by discrete sampling on the raised cosine function. In an embodiment, the length of the independent variable corresponding to a non-zero function value of the raised cosine function is less than or equal to the bandwidth occupied by the first data sequence.

The raised cosine function $y(f)$ satisfies the following formula:

$$
y(f) = \begin{cases}
A & 0 \le |f| < f_0(1-\alpha) \\
\dfrac{A}{2}\left(1 + \cos\left(\dfrac{|f| - f_0(1-\alpha)}{2f_0\alpha}\pi\right)\right) & f_0(1-\alpha) \le |f| < f_0(1+\alpha) \\
0 & |f| \ge f_0(1+\alpha)
\end{cases}
$$

.

Here A denotes a constant, $\alpha$ denotes the roll-off factor of the raised cosine function, $2f_0$ denotes the half-power bandwidth of the raised cosine function, and $2f_0(1 + \alpha)$ denotes the length of the independent variable corresponding to a non-zero function value of the raised cosine function.

The following describes the data transmission method of the present application in conjunction with embodiments:

Embodiment one

The frequency-domain data sequence $[X(j)] = [x(1), x(2), ..., x(J)]$. The predefined frequency-domain data sequence $[Z(j)] = [z(1), z(2), ..., z(J)]$. The frequency-domain data sequence $[X(j)]$ is pointwise-multiplied by the predefined frequency-domain data sequence $[Z(j)]$ to form the data sequence $[S(j)]$. The data sequence $[S(j)]$ is expressed as follows:

$[S(j)] = [x(1) \cdot z(1), x(2) \cdot z(2), \cdots, x(J) \cdot z(J)]$. Here $\cdot$ denotes multiplication.

If oversampling is not required, the data sequence $[S(j)]$ experiences an inverse Fourier transform to form the data sequence $[s(k)]$. Here $k = 1, 2, ..., K$, and $J = K$.

If oversampling is required, a zero-padding operation is performed on the data sequence [$S(j)$] to form the data sequence [$S(k)$], and the data sequence [$S$(k)] experiences an inverse Fourier transform to form the data sequence [$s$ (k)]. Here $k = 1,2,..., K$, and $J < K$

The data sequence [$s(k)$] is transmitted on a physical time-frequency resource.

Embodiment two

The frequency-domain data sequence [$X(j)$] is pointwise-multiplied by the predefined frequency-domain data sequence [$Z(j)$] to form the data sequence [$S(j)$].

The frequency-domain data sequence [$X(j)$] is formed from the time-domain data sequence [$x$ ($j$)] by a Fourier transform. The time-domain data sequence [$x$ ($j$)] is generated from the data sequence [$d(i)$]. The constellation modulation of the data sequence [$d$ ($i$)] is $\pi$/2-BPSK. The data sequence [$d$ ($i$)] is the data sequence [$X$ ($j$)].

In this embodiment, the data sequence [$d$ ($i$) = [$d(0)$, $d(1)$, $d(2)$, $d(3)$, $d(4)$] = [1, 1j, -1, -j, 1], $i$ = 0, 1, 2, 3, 4], the data sequence [$d(i)$] is the data sequence [$x(j)$], and the sequence [$x(j)$ = [$x(0)$, $x(1)$, $x(2)$, $x(3)$, $x(4)$] = [$d(0)$, $d(1)$, $d(2)$, $d(3)$, $d$ (4)] = [1, 1j, -1, -j, 1], $j$ = 0, 1, 2, 3, 4]

Embodiment three

The frequency-domain data sequence [$X(j)$] is pointwise-multiplied by the predefined frequency-domain data sequence [$Z(j)$] to form the data sequence [$S$ ($j$)].

The frequency-domain data sequence [$X(j)$] is formed from the time-domain data sequence [$x(j)$] by a Fourier transform. The time-domain data sequence [$x(j)$] is generated from the data sequence [$d(i)$]. The constellation modulation of the data sequence [$d$ ($i$)] is $\pi$/2-BPSK. One piece of data is inserted between each two adjacent pieces of data in the data sequence [$d$ ($i$)], and the inserted piece of data is the sum of the two adjacent pieces of data multiplied by $\dfrac{\sqrt{2}}{2}$. Then the time-domain reference sequence [$x(j)$] is formed.

In this embodiment, the data sequence [$d$ ($i$) = [$d(0)$, $d(1)$, $d(2)$, $d(3)$, $d(4)$ = [1, 1j, - 1, - j, 1], $i$ = 0, [1, 2, 3, 4], and the time-domain data sequence

$$[x(j) = [x(0), x(1), x(2), x(3), x(4), x(5), x(6), x(7), x(8) = [d(0), \frac{\sqrt{2}(d(0) + d(1))}{2},$$

$$d(1), \frac{\sqrt{2}(d(1) + d(2))}{2}, d(2), \frac{\sqrt{2}(d(2) + d(3))}{2}, d(3), \frac{\sqrt{2}(d(3) + d(4))}{2}, d(4)]] = [1, \frac{\sqrt{2}(1 + 1j)}{2},$$

$$1j, \frac{\sqrt{2}(-1 + 1j)}{2}, -1, \frac{\sqrt{2}(-1 - 1j)}{2}, -j, \frac{\sqrt{2}(1 - 1j)}{2}, 1], j = 0, 1, 2, 3, 4, 5, 6, 7, 8]$$

Embodiment four

The frequency-domain data sequence [$X$ ($j$)] is pointwise-multiplied by the predefined frequency-domain data sequence [$Z(j)$] to form the data sequence [$S$ ($j$)].

The frequency-domain data sequence [$X(j)$] is formed from the time-domain data sequence [$x(j)$] by a Fourier transform. The time-domain data sequence [$x(j)$] is generated from the data sequence [$d(j)$]. N pieces of data are inserted between each two adjacent pieces of data in the data sequence [$d$ ($i$)]. Each of the N pieces of data is the sum of the two adjacent pieces of data multiplied by $\dfrac{\sqrt{2}}{2}$. Then the time-domain data sequence [$x$ ($j$)] is formed. Here N = 0 or 1. The constellation modulation of the data sequence [$d(i)$] is $\pi$/2-BPSK.

In this embodiment, the data sequence [$d(i$ ) = [$d(0)$, $d(1)$, $d(2)$, $d(3)$, $d(4)$ = [1, 1j, - 1, - j, 1], $i$ = 0, 1, 2, 3, 4]. N pieces of data are inserted between each two adjacent pieces of data in the data sequence [$d$ ($i$)]. The value of N is 0. That is, no data is inserted between each two adjacent pieces of data in the data sequence [$d$ ($i$)]. The data sequence [$d$ ($i$)] is the data sequence [$x$ ($j$)]. The sequence

$$[x(j) = [\bar{x}(0), x(1), x(2), x(3), x(4)] = [d(0), d(1), d(2), d(3), d(4)] = [1, 1j, -1, -j, 1],$$
$$j = 0, 1, 2, 3, 4]$$

Embodiment five

The frequency-domain data sequence [$X(j)$] is pointwise-multiplied by the predefined frequency-domain data sequence [$Z(j)$] to form the data sequence [$S(j)$].

The frequency-domain data sequence [$X(j)$] is formed from the time-domain data sequence [$X(j)$] by a Fourier transform. The time-domain data sequence [$x(j)$] is generated from the data sequence [$d(i)$]. N pieces of data are inserted between each two adjacent pieces of data in the data sequence [$d(i)$]. Each of the N pieces of data is the sum of the two adj acent pieces of data multiplied by $\dfrac{\sqrt{2}}{2}$. Then the time-domain data sequence [$x(j)$] is formed. Here N = 0 or 1. The constellation modulation of the data sequence [$d(i)$] is $\pi/2$-BPSK.

In this embodiment, the data sequence [$d(i) = [d(0), d(1), d(2), d(3), d(4) = [1, 1j, -1, -j, 1], i = 0, [1, 2, 3, 4]$. N pieces of data are inserted between each two adjacent pieces of data in the data sequence [$d(i)$]. The value of N is 1. That is, one piece of data is inserted between each two adjacent pieces of data in the data sequence [$d(i)$], and the inserted piece of data is the sum of the two adjacent pieces of data multiplied by $\dfrac{\sqrt{2}}{2}$. Then the time-domain reference sequence [$x(j)$] is formed. The time-domain data sequence

$$[x(j) = [d(0), \frac{\sqrt{2}(d(0) + d(1))}{2}, d(1), \frac{\sqrt{2}(d(1) + d(2))}{2}, d(2), \frac{\sqrt{2}(d(2) + d(3))}{2}, d(3),$$
$$\frac{\sqrt{2}(d(3) + d(4))}{2}, d(4)]] = [x(0), x(1), x(2), x(3), x(4), x(5), x(6), x(7), x(8)][1, \frac{\sqrt{2}(1 + 1j)}{2},$$
$$1j, \frac{\sqrt{2}(-1 + 1j)}{2}, -1, \frac{\sqrt{2}(-1 - 1j)}{2}, -j, \frac{\sqrt{2}(1 - 1j)}{2}, 1], j = 0, 1, 2, 3, 4, 5, 6, 7, 8]$$

The data sequence $d(0)$ is the time-domain data sequence $x(0)$. That is, $x(0) = d(0) = 1$. One piece of data is inserted between the data sequence $d(0)$ and the data sequence $d(1)$ to form the time-domain data sequence $x(1)$. The time-domain data sequence $x(1)$ is the sum of the data sequence $d(0)$ and the data sequence $d(1)$ multiplied by $\dfrac{\sqrt{2}}{2}$.

That is, $x(1) = \dfrac{\sqrt{2}(d(0) + d(1))}{2} = \dfrac{\sqrt{2}(1 + 1j)}{2}$. The data sequence $d(1)$ is the time-domain data sequence $x(2)$. That is, $x(2) = d(1) = 1j$. One piece of data is inserted between the data sequence $d(1)$ and the data sequence $d(2)$ to form the time-domain data sequence $x(3)$. The time-domain data sequence $x(3)$ is the sum of the data sequence $d(1)$ and the data sequence $d(2)$ multiplied by $\dfrac{\sqrt{2}}{2}$. That is, $x(3) = \dfrac{\sqrt{2}(d(1) + d(2))}{2} = \dfrac{\sqrt{2}(-1 + 1j)}{2}$. The data sequence $d(2)$ is the time-domain data sequence $x(4)$. That is, $x(4) = d(2) = -1$. One piece of data is inserted between the data sequence $d(2)$ and the data sequence $d(3)$ to form the time-domain data sequence $x(5)$. The time-domain data sequence $x(5)$ is the sum of the data sequence $d(2)$ and the data sequence $d(3)$ multiplied by $\dfrac{\sqrt{2}}{2}$. That is, $x(5) = \dfrac{\sqrt{2}(d(2) + d(3))}{2} = \dfrac{\sqrt{2}(-1 - 1j)}{2}$. The data sequence $d(3)$ is the time-domain data sequence $x(6)$. That is, $x(6) = d(3) = -j$. One piece of data is inserted between the data sequence $d(3)$ and the data sequence $d(4)$ to form the time-domain data sequence $x(7)$. The time-domain data sequence $x(7)$ is the sum of the data sequence $d(3)$ and the data sequence $d(4)$ multiplied by $\dfrac{\sqrt{2}}{2}$ . That is, $x(7) = \dfrac{\sqrt{2}(d(3) + d(4))}{2} = \dfrac{\sqrt{2}(1-1j)}{2}$ . The data sequence $d(4)$ is the time-domain data sequence $x(8)$. That is, $x(8) = d(4) = 1$.

Embodiment six

The frequency-domain data sequence $[X(j)]$ is pointwise-multiplied by the predefined frequency-domain data sequence $[Z(j)]$ to form the data sequence $[S(j)]$.

The frequency-domain data sequence $[X(j)]$ is formed from the time-domain data sequence $[x(j)]$ by a Fourier transform. The time-domain data sequence $[x(j)]$ is generated from the data sequence $[d(i)]$. N pieces of data are inserted between each two adjacent pieces of data in the data sequence $[d(i)]$. The magnitude of each of the inserted N pieces of data is the same as the magnitude of each of the two adjacent pieces of data. The phase difference between adjacent pieces of data obtained after the N pieces of data are inserted is $\dfrac{\pi}{2N+2}$ . N is a non-negative integer. The constellation modulation of the data sequence $[d(i)]$ is $\pi/2$-BPSK.

In this embodiment, the data sequence $[d(i) = [d(0), d(1), d(2), d(3), d(4) = [1, 1j, -1, -j, 1]$, $i = 0, 1, 2, 3, 4]$. N pieces of data are inserted between each two adjacent pieces of data in the data sequence $[d(i)]$. The magnitude of each of the inserted N pieces of data is the same as the magnitude of each of the two adjacent pieces of data. The phase difference between adjacent pieces of data obtained after the N pieces of data are inserted is $\dfrac{\pi}{2N+2}$ . N is a non-negative integer.

When the value of N is 0, no data is inserted between each two adjacent pieces of data in the data sequence $[d(i)]$, the data sequence $[d(i)]$ is the data sequence $[x(j)]$, the constellation modulation of the data sequence $[d(i)]$ is $\pi/2$-BPSK, and the constellation modulation of the data sequence $[x(j)]$ is also $\pi/2$-BPSK. The data sequence $[x(j)]$ has the same magnitude. The phase difference between adjacent pieces of data $\dfrac{\pi}{2}(\dfrac{\pi}{2N+2} = \dfrac{\pi}{2}, \; N = 0)$ . When the value of N is 1, that is, one piece of data is inserted between each two adjacent pieces of data in the data sequence $[d(i)]$. The time-domain data sequence $[x(j) = [x(0), x(1), x(2), x(3), x(4), x(5), x(6), x(7), x(8)]$. FIG. 2 is a diagram illustrating the insertion of one piece of data between two adjacent pieces of data. In FIG. 2, the horizontal axis represents the real part of the data, and the vertical axis represents the imaginary part of the data. The data sequence $d(0)$ is the time-domain data sequence $x(0)$. One piece of data is inserted between the data sequence $d(0)$ and the data sequence $d(1)$ to form the time-domain data sequence $x(1)$. The data sequence $d(1)$ is the time-domain data sequence $x(2)$. One piece of data is inserted between the data sequence $d(1)$ and the data sequence $d(2)$ to form the time-domain data sequence $x(3)$. The data sequence $d(2)$ is the time-domain data sequence $x(4)$. One piece of data is inserted between the data sequence $d(2)$ and the data sequence $d(3)$ to form the time-domain data sequence $x(5)$. The data sequence $d(3)$ is the time-domain data sequence $x(6)$. One piece of data is inserted between the data sequence $d(3)$ and the data sequence $d(4)$ to form the time-domain data sequence $x(7)$. The data sequence $d(4)$ is the time-domain data sequence $x(8)$. The data sequence $[x(j)]$ has magnitudes $[1, 1, 1, 1, 1, 1, 1, 1, 1]$. The magnitude of each of the inserted pieces of data $[x(1), x(3), x(5), x(7)]$ is the same as the magnitude of each of the two adjacent pieces of data $[x(0)x(2), x(2)x(4), x(4)x(6), x(6)x(8)]$ $x(0), x(1), x(2), x(3), x(4), x(5), x(6), x(7), x(8)$ has phases $[0, \dfrac{\pi}{4}, \dfrac{\pi}{2}, \dfrac{3\pi}{4}, \pi, \dfrac{5\pi}{4}, \dfrac{3\pi}{2}, \dfrac{7\pi}{4}, 2\pi]$ . The phase difference between the inserted data $[x(1), x(3), x(5), x(7)]$ and two adjacent pieces of data $[x(0)x(2), x(2)x(4), x(4)x(6), x(6)x(8)]$ is $\dfrac{\pi}{4}$ . $(\dfrac{\pi}{2N+2} = \dfrac{\pi}{4}, \; N = 1)$ .

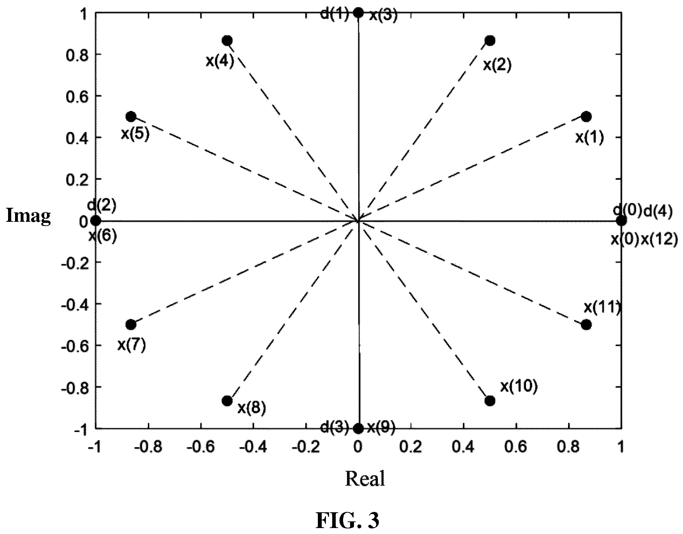

When the value of N is 2, that is, two pieces of data are inserted between each two adjacent pieces of data in the data sequence $[d(i)]$ to form the time-domain data sequence $[x(j)]$. The time-domain data sequence $[x(j) = [x(0), x(1), x(2), x(3), x(4), x(5), x(6), x(7), x(8), x(9), x(10), x(11), x(12)]$. FIG. 3 is a diagram illustrating the insertion of two pieces of data between two adjacent pieces of data. In FIG. 3, the horizontal axis represents the real part of the data, and the vertical axis represents the imaginary part of the data. The data sequence $d(0)$ is the time-domain data sequence $x(0)$. Two pieces of data which are inserted between the data sequence $d(0)$ and the data sequence $d(1)$ are two time-domain data sequences $x(1)$ and $x(2)$. The data sequence $d(1)$ is the time-domain data sequence $x(3)$. Two pieces of data which are inserted between the data sequence $d(1)$ and the data sequence $d(2)$ are two time-domain data sequences $x(4)$ and $x(5)$. The data sequence $d(2)$ is the time-domain data sequence $x(6)$. Two pieces of data which are inserted between the data sequence $d(2)$ and the data sequence $d(3)$ are two time-domain data sequences $x(7)$ and $x(8)$. The data sequence $d$

( 3) is the time-domain data sequence x( 9). Two pieces of data which are inserted between the data sequence d( 3) and the data sequence d( 4) are two time-domain data sequences x( 10) and x( 11). The data sequence d( 4) is the time-domain data sequence x( 12). The data sequence [x (j )] has magnitudes [1, 1, 1, 1, 1, 1, 1, 1, 1, 1, 1, 1 ,1]. The magnitude of each of the inserted pieces of data [x( 1), x( 2), x( 4), x( 5), x( 7), x( 8), x( 10), x( 11)] is the same as the magnitude of each of the two adjacent pieces of data [x( 0)x( 2), x( 1)x( 3), x( 3)x( 5), x( 4)x( 6), x( 6)x( 8), x( 7)x( 9), x( 9)x( 11), x( 10)x( 12)] [x( 0), x( 1), x ( 2) , x( 3) , x( 4) , x( 5) , x( 6) , x( 7) , x( 8) , x( 9) , x( 10) , x( 11) , x( 12)] has phases

$$\left[0, \frac{\pi}{6}, \frac{\pi}{3}, \frac{\pi}{2}, \frac{2\pi}{3}, \frac{5\pi}{6}, \pi, \frac{7\pi}{6}, \frac{4\pi}{3}, \frac{3\pi}{2}, \frac{5\pi}{3}, \frac{11\pi}{6}, 2\pi\right]$$

. The phase difference between the inserted data [x( 1), x( 2), x( 4), x( 5), x( 7), x( 8), x( 10), x( 11)] and two adjacent pieces of data [x( 0)x( 2), x( 1)x( 3), x( 3)x( 5), x( 4)x ( 6), x( 6)x( 8), x(7)x( 9), x( 9)x( 11), x( 10)x( 12) ] is $\dfrac{\pi}{6}$ , where $\dfrac{\pi}{2N+2} = \dfrac{\pi}{6}, N = 2$ .

The advantage of this embodiment is that each piece of data in a data sequence has the same magnitude. The phase difference between adjacent pieces of data after the insertion is $\dfrac{\pi}{2N + 2}$ . As N increases, the phase difference between adjacent pieces of data decreases, resulting in a lower PAPR for the time-domain data.

Embodiment seven

The frequency-domain data sequence [X (j )] is pointwise-multiplied by the predefined frequency-domain data sequence [Z (j )] to form the data sequence [S (j )].

The predefined frequency-domain data sequence [Z (j )] is generated using a root-raised cosine function. For example, the root-raised cosine function is discretely sampled to obtain the frequency-domain data sequence [Z (j )]. The sampling interval of the discrete sampling is the same as the frequency-domain interval between adjacent pieces of data in the frequency-domain data sequence [X (j )]. That is, the discrete sampling interval is the same as the subcarrier spacing.

Assuming that the frequency-domain raised cosine function y(f ) is expressed as follows:

$$y(f) = \begin{cases} A & 0 \le |f| < f_0(1-\alpha) \\ \dfrac{A}{2}(1+\cos(\dfrac{|f| - f_0(1-\alpha)}{2f_0\alpha}\pi)) & f_0(1-\alpha) \le |f| < f_0(1+\alpha) \\ 0 & |f| \ge f_0(1+\alpha) \end{cases} ,$$

then the frequency-domain root-raised cosine function (that is, the square root of the raised cosine function) *sry* (f ) satisfies $sry(f) = \sqrt{y(f)}$ .

Here A denotes a constant, $\alpha$ denotes the roll-off factor, $2f_0$ denotes the half-power bandwidth of the frequency-domain raised cosine function. In this embodiment, $2f_0$ denotes the half-power bandwidth of the root-raised cosine function, and $2f_0(1 + \alpha)$ denotes the length of the root-raised cosine function (that is, the length of the independent variable corresponding to a non-zero function value of the root-raised cosine function).

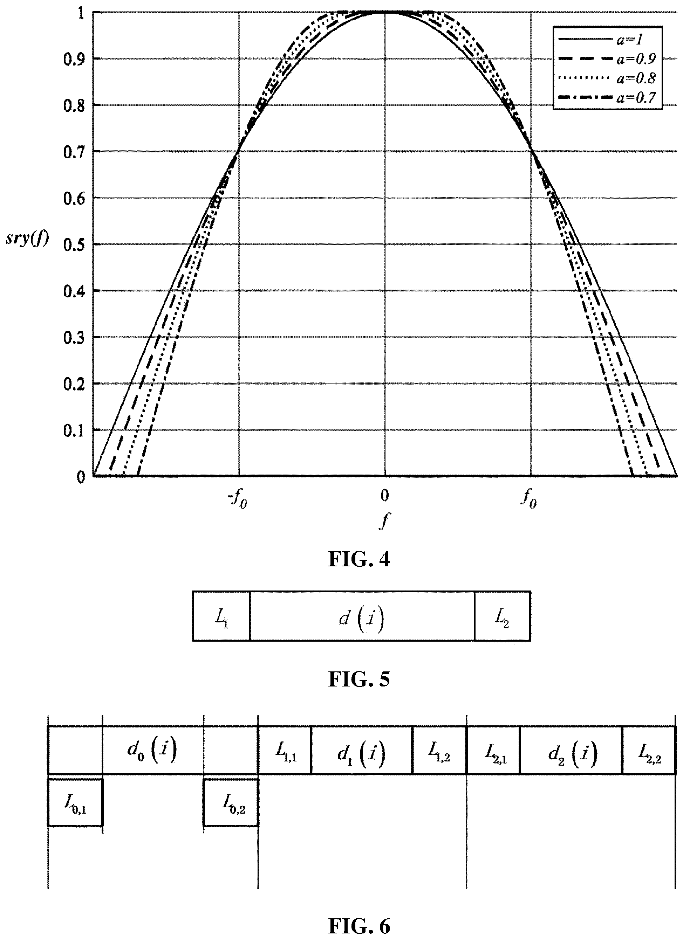

In this embodiment, the values of the roll-off factor $\alpha$ of the root-raised cosine function are [0.7, 0.8, 0.9, 1]. FIG. 4 is a waveform diagram of a root-raised cosine function according to an embodiment of the present application. As shown in FIG. 4, when the value of $\alpha$ is 0.7, the length of the root-raised cosine function is 3. $4f_0$; when the value of $\alpha$ is 0.8, the length of the root-raised cosine function is 3. $6f_0$; when the value of $\alpha$ is 0.9, the length of the root-raised cosine function is 3. $8f_0$; when the value of $\alpha$ is 1, the length of the root-raised cosine function is $4f_0$. The length of the root-raised cosine function is the length of the independent variable corresponding to a non-zero function value of the root-raised cosine function.

Embodiment eight

The frequency-domain data sequence [X (j )] is pointwise-multiplied by the predefined frequency-domain data sequence [Z(j )] to form the data sequence [S (j )].

The predefined frequency-domain data sequence [Z (j )] is generated using a root-raised cosine function. The value range of the roll-off factor $\alpha$ of the root-raised cosine function is [0.7, 1]. The ratio of the half-power bandwidth to the bandwidth occupied by the frequencydomain reference sequence [X (j )] is P/2. The value range of P is [0.9, 1.1].

In the present application, $2f_0$ denotes the half-power bandwidth of the frequency-domain root-raised cosine function, and $2f_0(1 + \alpha)$ denotes the length of the frequency-domain root-raised cosine function. In this embodiment, the value of the roll-off factor $\alpha$ of the root-raised cosine function is 1, that is, the length of the frequency-domain root-raised cosine function is $2f_0(1 + \alpha) = 4f_0$. In this embodiment, the bandwidth occupied by the frequency-domain data sequence [$X(j)$] is $4f_0$, that is, the half-power bandwidth $2f_0$ of the root-raised cosine function is half of the bandwidth $4f_0$ occupied by the

$$2f_0 = 4f_0 \cdot (\frac{1}{2})$$

frequency-domain data sequence [$X(j)$]. Here , and P = 1. The length of the frequency-domain root-raised cosine function is equal to the bandwidth occupied by the frequency-domain data sequence [$X(j)$].

Embodiment nine

The frequency-domain data sequence [$X(j)$] is pointwise-multiplied by the predefined frequency-domain data sequence [$Z(j)$] to form the data sequence [$S(j)$].

The predefined frequency-domain data sequence [$Z(j)$] is generated using a root-raised cosine function. The value range of the roll-off factor $\alpha$ of the root-raised cosine function is [0.7, 1]. The ratio of the half-power bandwidth to the bandwidth occupied by the frequency-domain reference sequence [$X(j)$] is P/2. The value range of P is [0.9, 1.1].

In the present application, $2f_0$ denotes the half-power bandwidth of the frequency-domain root-raised cosine function, and $2f_0(1 + \alpha)$ denotes the length of the frequency-domain root-raised cosine function. In this embodiment, the value of the roll-off factor $\alpha$ of the root-raised cosine function is 0.7, that is, the length of the frequency-domain root-raised cosine function is $2f_0(1 + \alpha) = 3.4f_0$. In this embodiment, the bandwidth occupied by the frequency-domain data sequence [$X(j)$] is $4f_0$, that is, the half-power bandwidth $2f_0$ of the root-raised cosine function is half of the bandwidth $4f_0$ occupied by

$$2f_0 = 4f_0 \cdot (\frac{1}{2})$$

the frequency-domain data sequence [$X(j)$]. Here , and P = 1. The length of the frequency-domain root-raised cosine function is less than the bandwidth occupied by the frequency-domain data sequence [$X(j)$].

Embodiment ten

The frequency-domain data sequence [$X(j)$] is pointwise-multiplied by the predefined frequency-domain data sequence [$Z(j)$] to form the data sequence [$S(j)$].

The predefined frequency-domain data sequence [$Z(j)$] is generated using a root-raised cosine function. The value range of the roll-off factor $\alpha$ of the root-raised cosine function is [0.7, 1]. The ratio of the half-power bandwidth to the bandwidth occupied by the frequency-domain reference sequence [$X(j)$] is P/2. The value range of P is [0.9, 1.1].

In the present application, $2f_0$ is defined as the half-power bandwidth of the frequency-domain root-raised cosine function. In this embodiment, the bandwidth occupied by the frequency-domain data sequence [$X(j)$] is $4f_0 \cdot (\frac{10}{9})$ , that

is, the half-power bandwidth $2f_0$ of the root-raised cosine function is $\frac{9}{20}$ of the bandwidth $4f_0$ occupied by the

$$2f_0 = 4f_0 \cdot (\frac{10}{9}) \cdot (\frac{\frac{9}{10}}{2})$$

frequency-domain data sequence [$X(j)$]. Here , and P = 0.9.

Embodiment eleven

The frequency-domain data sequence [$X(j)$] is pointwise-multiplied by the predefined frequency-domain data sequence [$Z(j)$] to form the data sequence [$S(j)$].

The predefined frequency-domain data sequence [$Z(j)$] is generated using a root-raised cosine function. The value range of the roll-off factor $\alpha$ of the root-raised cosine function is [0.7, 1]. The ratio of the half-power bandwidth to the bandwidth occupied by the frequency-domain reference sequence [$X(j)$] is P/2. The value range of P is [0.9, 1.1].

In the present application, $2f_0$ is defined as the half-power bandwidth of the frequency-domain root-raised cosine function. In this embodiment, the bandwidth occupied by the frequency-domain data sequence [$X(j)$] is $4f_0 \cdot (\frac{10}{11})$ , that

$$\frac{11}{20}$$

is, the half-power bandwidth $2f_0$ of the root-raised cosine function is ____ of the bandwidth $4f_0$ occupied by the frequency-domain data sequence [$X(j)$]. Here P = 1.1.

Embodiment twelve

FIG. 5 is a diagram of a data sequence according to an embodiment of the present application. FIG. 5 illustrates an example in which the data sequence [$d(i)$] contains L pieces of reference sequence data as well as constellation-modulated data. Here L ≥ 0.

In FIG. 5, the data sequence [$b(m)$] composed of 0 and 1 experiences constellation modulation to form the data sequence [$d(i)$]. The constellation modulation of the data sequence [$b(m)$] is $\pi$/2-BPSK. The data sequence [$d(i)$] contains L pieces of reference sequence data as well as constellation-modulated data. In this embodiment, L = 2. There is one piece of reference sequence data $L_1$ before the constellation-modulated data sequence [$d(i)$] and one piece of reference sequence data $L_2$ after the constellation-modulated data sequence [$d(i)$]. The data sequence [$d(i)$] contains constellation-modulated data and L pieces of reference sequence data to form one data block. The length of this data block is equal to the length of one OFDM symbol. The length of this data block is also equal to the length of one FFT window.

Embodiment thirteen

In this embodiment, the data sequence [$d(i)$] is a reference sequence. N pieces of data are inserted between each two adjacent pieces of data in the reference sequence The data is the sum of the two adjacent pieces of data multiplied by

$$\frac{\sqrt{2}}{2}$$

. Then the time-domain reference sequence [$x(j)$] is formed. Here N = 0 or 1. The constellation modulation of the reference sequence [$d(i)$] is $\pi$/2-BPSK.

When the value of N is 0, no data is inserted between each two adjacent pieces of data in the reference sequence [$d(i)$], and the reference sequence [$d(i)$] is used as the time-domain reference sequence [$x(j)$].

When the value of N is 1, one piece of data is inserted between each two adjacent pieces of data in the reference

$$\frac{\sqrt{2}}{2}$$

sequence [$d(i)$], and the inserted piece of data is the sum of the two adjacent pieces of data multiplied by ____ . Then the time-domain reference sequence[$x(j)$] is formed.

Then the time-domain reference sequence [$x(j)$] experiences a Fourier transform to form the frequency-domain reference sequence [$X(j)$]. The frequency-domain reference sequence [$X(j)$] is pointwise-multiplied by the predefined frequency-domain data sequence [$Z(j)$] to form the reference sequence [$S(j)$]. Here $j$ = 1, 2, ... , J, $k$ = 1, 2, ... , K, J and K are each a positive integer, and $J \leq K$.

The predefined frequency-domain data sequence [$Z(j)$] is generated using a root-raised cosine function. The value range of the roll-off factor $\alpha$ of the root-raised cosine function is [0.7, 1]. The ratio of the half-power bandwidth to the bandwidth occupied by the frequency-domain reference sequence [$X(j)$] is P/2. The value range of P is [0.9, 1.1].

When $J$ = $K$, it is feasible to perform an inverse Fourier transform on the reference sequence [$S(j)$] to form the reference sequence [$s(k)$].

When $J$ < $K$, it is feasible to perform a zero-padding operation on the reference sequence [$S(j)$] to form the data sequence [$S(k)$] and then perform an inverse Fourier transform on the data sequence [$S(k)$] to form the data sequence [$s(k)$] .

Then the data sequence [$s(k)$] is transmitted on a physical time-frequency resource.

Embodiment fourteen

FIG. 6 is a diagram of a data sequence according to an embodiment of the present application. FIG. 6 shows one reference sequence [$d_0(i)$] and two data sequences[$d_1(i)$] and [$d_2(i)$].

The data sequences [$d_1(i)$] and [$d_2(i)$] contain L pieces of reference sequence data as well as constellation-modulated data. In this embodiment, L = 2. The first data sequence [$d_1(i)$] contains two pieces of reference sequence data $L_{1,1}$ and $L_{1,2}$ as well as constellation-modulated data. The second data sequence [$d_2(i)$] contains two pieces of reference sequence data $L_{2,1}$ and $L_{2,2}$ as well as constellation-modulated data.

The first piece of reference sequence data $L_{1,1}$ in the first data sequence [$d_1(i)$] is the same as the reference sequence data corresponding to the position $L_{0,1}$ of the reference sequence $[d_0(i)]$. The first piece of reference sequence data $L_{2,1}$ in the second data sequence $[d_2(i)]$ is the same as the reference sequence data corresponding to the position $L_{0,1}$ of the reference sequence $[d_0(i)]$. The second piece of reference sequence data $L_{1,2}$ in the first data sequence $[d_1(i)]$ is the same as the reference sequence data corresponding to the position $L_{0,2}$ of the reference sequence $[d_0(i)]$. The second piece of reference sequence data $L_{2,2}$ in the second data sequence $[d_2(i)]$ is the same as the reference sequence data corresponding to the position $L_{0,2}$ of the reference sequence $[d_0(i)]$.

Embodiment fifteen

The frequency-domain data sequence $[X(j)]$ is pointwise-multiplied by the predefined time-domain data sequence $[Z(j)]$ to form the data sequence $[S(j)]$. Here $[X(j)] = [x(1), x(2), ..., x(J)]$, and $[Z(j)] = [z(1), z(2), ..., z(J)]$. The data sequence $[S(j)]$ is expressed as follows:

$$[S(j)] = [x(1) \cdot z(1),\ x(2) \cdot z(2),\ \cdots, x(J) \cdot z(J)],$$

here $\cdot$ denotes multiplication.

If oversampling is not required, the data sequence $[S(k)]$ experiences an inverse Fourier transform to form the data sequence $[s(k)]$. Here $k = 1, 2, ..., K$, and $J = K$.

If oversampling is required, a zero-padding operation is performed on the data sequence $[S(j)]$ to form the data sequence $[S(k)]$, and the data sequence $[S(k)]$ experiences an inverse Fourier transform to form the data sequence $[s(k)]$. Here $k = 1, 2, ..., K$, and $J < K$

Then the data sequence $[s(k)]$ is transmitted on a physical time-frequency resource after being filtered.

Embodiment sixteen

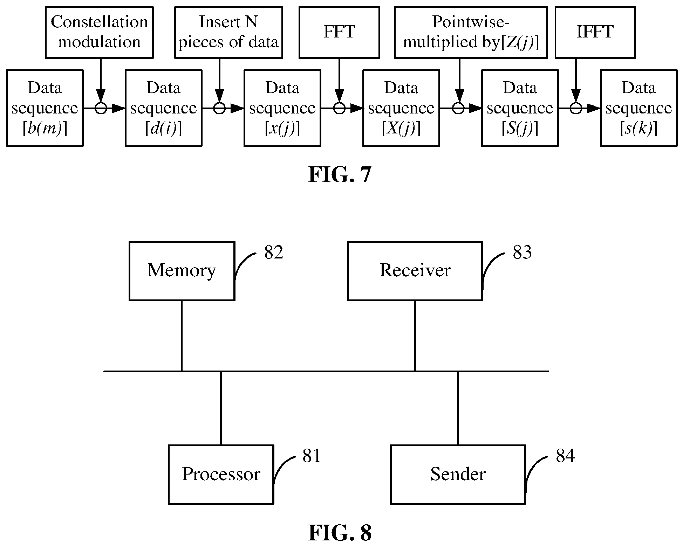

FIG. 7 is a diagram illustrating the structure of a data processing network for data modulation in a data transmission method according to an embodiment of the present application. As shown in FIG. 7, the data sequence $[b(m)]$ composed of 0 and 1 experiences constellation modulation to form the data sequence $[d(i)]$, where the constellation modulation is $\pi/2$-BPSK. Then N pieces of data (where N = 0 or 1) are inserted between each two adjacent pieces of data in the data sequence $[d(i)]$. Each of the N pieces of data is the sum of the two adjacent pieces of data multiplied by $\dfrac{\sqrt{2}}{2}$. Then the time-domain data sequence $[x(j)]$ is formed. Here j = 1, 2, ..., J.

When the value of N is 0, no data is inserted between each two adjacent pieces of data in the data sequence $[d(i)]$, the data sequence $[d(i)]$ is the time-domain data sequence $[x(j)]$, the constellation modulation of the data sequence $[d(i)]$ is $\pi/2$-BPSK, and the constellation modulation of the time-domain data sequence $[x(j)]$ is also $\pi/2$-BPSK. When the value of N is 1, one piece of data is inserted between each two adjacent pieces of data in the data sequence $[d(i)]$, and the data is the sum of the two adjacent pieces of data multiplied by $\dfrac{\sqrt{2}}{2}$. Then the time-domain data sequence is formed. Then the time-domain data sequence $[x(j)]$ experiences a Fourier transform to form the frequency-domain data sequence $[X(j)]$. Then the frequency-domain data sequence $[X(j)]$ experiences frequency-domain shaping or filtering by a root-raised cosine function, that is, pointwise multiplication is performed between the frequency-domain data sequence $[X(j)]$ and the predefined frequency-domain data sequence $[Z(j)]$, to form the frequency-domain data sequence $[S(j)]$. The data sequence $[S(j)]$ is expressed as follows:

$[S(j)] = [x(1) \cdot z(1), x(2) \cdot z(2), \cdots, x(J) \cdot z(J)]$. Here $\cdot$ denotes multiplication.

The frequency-domain data sequence $[Z(j)]$ is generated using the root-raised cosine function. For example, the root-raised cosine function is discretely sampled to obtain the frequency-domain data sequence $[Z(j)]$. The sampling interval of the discrete sampling is the same as the frequency-domain interval between adjacent pieces of data in the frequency-domain data sequence $[X(j)]$. That is, the discrete sampling interval is the same as the subcarrier spacing.

If oversampling is not required, the data sequence $[S(k)]$ experiences an inverse Fourier transform to form the data sequence $[s(k)]$. Here $k = 1, 2, ..., K$, and $J = K$.

If oversampling is required, a zero-padding operation is performed on the data sequence $[S(j)]$ to form the data sequence $[S(k)]$, and the data sequence $[S(k)]$ experiences an inverse Fourier transform to form the data sequence $[s(k)]$. Here $k = 1, 2, ..., K$, and $J < K$

Then the data sequence $[s(k)]$ is transmitted on a physical time-frequency resource.

**EP 4 572 276 A1**

An embodiment of the present application provides a data transmission device. The device includes a memory configured to store a program; and a processor configured to execute the program to perform a pointwise multiplication between a first data sequence and a second data sequence to obtain a third data sequence, where the first data sequence and the second data sequence are each a frequency-domain data sequence; perform an inverse Fourier transform on the third data sequence to obtain a fourth data sequence; and transmit the fourth data sequence on a physical time-frequency resource.

FIG. 8 is a diagram illustrating the structure of a data transmission device according to an embodiment of the present application. As shown in FIG. 8, the data transmission device includes a processor 81, a memory 82, a receiver 83, and a sender 84. One or more processors 81 may be configured in the data transmission device. FIG. 8 uses one processor by way of example. The processor 81, the memory 82, the receiver 83, and the sender 84 in the data transmission device may be connected by a bus or in other manners. FIG. 8 uses connection by a bus by way of example.

As a computer-readable storage medium, the memory 82 is configured to store software programs, computer-executable programs, and modules, for example, program instructions/modules corresponding to the data transmission method of the embodiment shown in FIG. 1 of the present application. The processor 81 is configured to execute the software programs, instructions, and modules stored in the memory 82 to perform various functions and data processing of the data transmission device, that is, to implement the data transmission method.

The memory 82 may mainly include a program storage region and a data storage region. The program storage region may store an operating system and an application program required by at least one function. The data storage region may store data created according to the use of the data transmission device. Additionally, the memory 82 may include a high-speed random-access memory and may also include a nonvolatile memory such as at least one disk memory, a flash memory, or another nonvolatile solid-state memory.

The receiver 83 is a combination of one or more devices or modules having a wireless signal receiving capability. The sender 84 is a combination of one or more devices or modules having a wireless signal sending capability.

An embodiment of the present application provides a storage medium storing computer-executable instructions which, when executed by a computer processor, cause the computer processor to perform a data transmission method. The method includes performing a pointwise multiplication between a first data sequence and a second data sequence to obtain a third data sequence, where the first data sequence and the second data sequence are each a frequency-domain data sequence; performing an inverse Fourier transform on the third data sequence to obtain a fourth data sequence; and transmitting the fourth data sequence on a physical time-frequency resource.

**Claims**

1. A data transmission method, comprising:

   performing a pointwise multiplication between a first data sequence and a second data sequence to obtain a third data sequence, wherein the first data sequence and the second data sequence are each a frequency-domain data sequence;
   performing an inverse Fourier transform on the third data sequence to obtain a fourth data sequence; and
   transmitting the fourth data sequence which is carried on a physical time-frequency resource.

2. The method of claim 1, wherein the second data sequence is generated using a root-raised cosine function.

3. The method of claim 2, wherein the root-raised cosine function is a frequency-domain compressed root-raised cosine function.

4. The method of claim 2, wherein a value range of a roll-off factor of the root-raised cosine function is [0.7, 1], and a ratio of a half-power bandwidth of the root-raised cosine function to a bandwidth occupied by the first data sequence is P/2, wherein a value range of P is [0.9, 1.1].

5. The method of claim 4, wherein P is 1.

6. The method of claim 4, wherein the roll-off factor of the root-raised cosine function is 1.

7. The method of claim 2, wherein the second data sequence is generated by discrete sampling on the root-raised cosine function.

8. The method of claim 2, wherein a length of an independent variable corresponding to a non-zero function value of the root-raised cosine function is less than or equal to a bandwidth occupied by the first data sequence.

9. The method of claim 2, wherein the root-raised cosine function is calculated as $sry(f) = \sqrt{y(f)}$ ,

wherein $y(f)$ denotes a raised cosine function and is calculated as:

$$y(f) = \begin{cases} A & 0 \le |f| < f_0(1-\alpha) \\ \dfrac{A}{2}(1+\cos(\dfrac{|f|-f_0(1-\alpha)}{2f_0\alpha}\pi)) & f_0(1-\alpha) \le |f| < f_0(1+\alpha) \\ 0 & |f| \ge f_0(1+\alpha) \end{cases} ,$$

wherein A denotes a constant, $\alpha$ denotes a roll-off factor of the root-raised cosine function, $2f_0$ denotes a half-power bandwidth of the root-raised cosine function, and $2f_0(1 + \alpha)$ denotes a length of an independent variable corresponding to a non-zero function value of the root-raised cosine function.

10. The method of claim 1, wherein the second data sequence is generated using a raised cosine function.

11. The method of claim 10, wherein the raised cosine function is a frequency-domain compressed raised cosine function.

12. The method of claim 10, wherein a value range of a roll-off factor of the raised cosine function is [0.7, 1], and a ratio of a half-power bandwidth of the raised cosine function to a bandwidth occupied by the first data sequence is P/2, wherein a value range of P is [0.9, 1.1].

13. The method of claim 12, wherein P is 1.

14. The method of claim 12, wherein the roll-off factor of the raised cosine function is 1.

15. The method of claim 10, wherein the second data sequence is generated by discrete sampling on the raised cosine function.

16. The method of claim 10, wherein a length of an independent variable corresponding to a non-zero function value of the raised cosine function is less than or equal to a bandwidth occupied by the first data sequence.

17. The method of claim 10, wherein the raised cosine function $y(f)$ is calculated as

$$y(f) = \begin{cases} A & 0 \le |f| < f_0(1-\alpha) \\ \dfrac{A}{2}(1+\cos(\dfrac{|f|-f_0(1-\alpha)}{2f_0\alpha}\pi)) & f_0(1-\alpha) \le |f| < f_0(1+\alpha) \\ 0 & |f| \ge f_0(1+\alpha) \end{cases} ,$$

wherein A denotes a constant, $\alpha$ is a roll-off factor of the raised cosine function, $2f_0$ denotes a half-power bandwidth of the raised cosine function, and $2f_0(1 + \alpha)$ denotes a length of an independent variable corresponding to a non-zero function value of the raised cosine function.

18. The method of any one of claims 1 to 17, wherein the first data sequence is generated from a fifth data sequence by a Fourier transform, wherein the fifth data sequence is a time-domain data sequence.

19. The method of claim 18, wherein the fifth data sequence is generated from a sixth data sequence, the sixth data sequence is formed by constellation modulation of a seventh data sequence composed of 0 and 1, and constellation modulation of the sixth data sequence is $\pi/2$-binary phase-shift keying ($\pi/2$-BPSK).

20. The method of claim 19, wherein the sixth data sequence is a reference sequence, and constellation modulation of the reference sequence is $\pi/2$-BPSK.

21. The method of claim 19 or 20, wherein the sixth data sequence contains L pieces of reference sequence data as well as constellation-modulated data, wherein $L \geq 0$.

22. The method of claim 19 or 20, wherein the fifth data sequence is generated from the sixth data sequence in the following manner:
N pieces of new data are inserted between each two adjacent pieces of data in the sixth data sequence, wherein each of the N pieces of new data is a sum of the two adjacent pieces of data multiplied by $\dfrac{\sqrt{2}}{2}$, and N is a non-negative integer.

23. The method of claim 22, wherein N is 0 or 1.

24. The method of claim 19 or 20, wherein the fifth data sequence is generated from the sixth data sequence in the following manner:
N pieces of new data are inserted between each two adjacent pieces of data in the sixth data sequence, wherein a magnitude of each of the N pieces of new data is the same as a magnitude of each of the two adjacent pieces of data, a phase difference between adjacent pieces of data in the sixth data sequence obtained after the N pieces of new data are inserted is $\dfrac{\pi}{2N + 2}$, and N is a non-negative integer.

25. The method of any one of claims 1 to 17, wherein a length of the first data sequence is the same as a length of the second data sequence.

26. The method of any one of claims 1 to 17, before transmitting the fourth data sequence on the physical time-frequency resource, further comprising:
filtering the fourth data sequence.

27. A data transmission device, comprising:

    a memory configured to store a program; and
    a processor configured to execute the program to perform a pointwise multiplication between a first data sequence and a second data sequence to obtain a third data sequence, wherein the first data sequence and the second data sequence are each a frequency-domain data sequence; perform an inverse Fourier transform on the third data sequence to obtain a fourth data sequence; and transmit the fourth data sequence on a physical time-frequency resource.

28. A non-volatile storage medium, comprising a stored program which, when executed, causes the data transmission method of any one of claims 1 to 26 to be performed.

Perform pointwise multiplication between a first data sequence and a second data sequence to obtain a third data sequence, where the first data sequence and the second data sequence are each a frequency-domain data sequence ~S110

Perform an inverse Fourier transform on the third data sequence to obtain a fourth data sequence ~S120

Transmit the fourth data sequence which is carried on a physical time-frequency resource ~S130

**FIG. 1**

**FIG. 2**

**FIG. 3**

**FIG. 4**

**FIG. 5**

**FIG. 6**

| Constellation modulation | | Insert N pieces of data | | FFT | | Pointwise-multiplied by[$Z(j)$] | | IFFT |
|---|---|---|---|---|---|---|---|---|

| Data sequence [$b(m)$] | | Data sequence [$d(i)$] | | Data sequence [$x(j)$] | | Data sequence [$X(j)$] | | Data sequence [$S(j)$] | | Data sequence [$s(k)$] |
|---|---|---|---|---|---|---|---|---|---|---|

**FIG. 7**

| Memory | 82 | | Receiver | 83 |
|---|---|---|---|---|

| Processor | 81 | | Sender | 84 |
|---|---|---|---|---|

**FIG. 8**

## INTERNATIONAL SEARCH REPORT

| International application No. |
| --- |
| **PCT/CN2023/099777** |

### A. CLASSIFICATION OF SUBJECT MATTER

H04L27/26(2006.01)i

According to International Patent Classification (IPC) or to both national classification and IPC

### B. FIELDS SEARCHED

Minimum documentation searched (classification system followed by classification symbols)

IPC：H04L,H04W

Documentation searched other than minimum documentation to the extent that such documents are included in the fields searched

Electronic data base consulted during the international search (name of data base and, where practicable, search terms used)

CNTXT, ENTEXTC, DWPI, ENTXT: 点乘, 根升余弦, 升余弦, 滤波, 减小, 降低, 频域, 序列, 峰均比, point, multiplicat+, root raised cosine, raised cosine, filter+, decreas+, reduc+, frequency domain, sequence, peak to average ratio, PAPR

### C. DOCUMENTS CONSIDERED TO BE RELEVANT

| Category* | Citation of document, with indication, where appropriate, of the relevant passages | Relevant to claim No. |
| --- | --- | --- |
| X | CN 114747258 A (ZTE CORP.) 12 July 2022 (2022-07-12) description, paragraphs [0019]-[0078], and figures 1-5 | 1, 18-28 |
| Y | CN 114747258 A (ZTE CORP.) 12 July 2022 (2022-07-12) description, paragraphs [0019]-[0078], and figures 1-5 | 2-17 |
| Y | CN 111901279 A (ZTE CORP.) 06 November 2020 (2020-11-06) description, paragraphs [0033]-[0117], and figures 1-5 | 2-17 |
| X | CN 114616805 A (ZTE CORP.) 10 June 2022 (2022-06-10) description, paragraphs [0022]-[0065], and figures 1-5 | 1, 18-28 |
| Y | CN 114616805 A (ZTE CORP.) 10 June 2022 (2022-06-10) description, paragraphs [0022]-[0065], and figures 1-5 | 2-17 |
| A | CN 114070698 A (HUAWEI TECHNOLOGIES CO., LTD.) 18 February 2022 (2022-02-18) entire document | 1-28 |
| A | CN 110191077 A (GUANGDONG POWER GRID COMPANY et al.) 30 August 2019 (2019-08-30) entire document | 1-28 |

☑ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **31 August 2023** | **08 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 572 276 A1**

**INTERNATIONAL SEARCH REPORT**

| International application No. |
| --- |
| **PCT/CN2023/099777** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022038319 A1 (INDIAN INSTITUTE OF TECHNOLOGY HYDERABAD et al.) 03 February 2022 (2022-02-03) entire document | 1-28 |

Form PCT/ISA/210 (second sheet) (July 2022)

21

## INTERNATIONAL SEARCH REPORT
### Information on patent family members

International application No.

**PCT/CN2023/099777**

| Patent document cited in search report | | | Publication date (day/month/year) | Patent family member(s) | | | Publication date (day/month/year) |
|---|---|---|---|---|---|---|---|
| CN | 114747258 | A | 12 July 2022 | CA | 3164401 | A1 | 20 May 2021 |
| | | | | WO | 2021093074 | A1 | 20 May 2021 |
| | | | | IN | 202247036421 | A | 01 July 2022 |
| | | | | KR | 20220108811 | A | 03 August 2022 |
| | | | | US | 2022311651 | A1 | 29 September 2022 |
| | | | | EP | 4074103 | A1 | 19 October 2022 |
| CN | 111901279 | A | 06 November 2020 | CA | 3185184 | A1 | 13 January 2022 |
| | | | | WO | 2022007507 | A1 | 13 January 2022 |
| | | | | KR | 20230031936 | A | 07 March 2023 |
| | | | | EP | 4181473 | A1 | 17 May 2023 |
| CN | 114616805 | A | 10 June 2022 | US | 2022200834 | A1 | 23 June 2022 |
| | | | | WO | 2021042318 | A1 | 11 March 2021 |
| | | | | EP | 4026286 | A1 | 13 July 2022 |
| | | | | KR | 20220054420 | A | 02 May 2022 |
| CN | 114070698 | A | 18 February 2022 | WO | 2022033450 | A1 | 17 February 2022 |
| | | | | US | 2023198822 | A1 | 22 June 2023 |
| CN | 110191077 | A | 30 August 2019 | None | | | |
| US | 2022038319 | A1 | 03 February 2022 | WO | 2020089931 | A1 | 07 May 2020 |

Form PCT/ISA/210 (patent family annex) (July 2022)